Europäisches Patentamt

European Patent Office

Office européen des brevets

(11) Veröffentlichungsnummer: **0 189 113**
**B1**

(12) **EUROPÄISCHE PATENTSCHRIFT**

(45) Veröffentlichungstag der Patentschrift: 16.05.90

(21) Anmeldenummer: 86100481.0

(22) Anmeldetag: 16.01.86

(51) Int. Cl.⁵: **F 01 P 11/10**

(54) Wärmetauscher.

(30) Priorität: 25.01.85 US 695147

(43) Veröffentlichungstag der Anmeldung:
30.07.86 Patentblatt 86/31

(45) Bekanntmachung des Hinweises auf die
Patenterteilung:
16.05.90 Patentblatt 90/20

(84) Benannte Vertragsstaaten:
DE FR GB

(56) Entgegenhaltungen:
EP-A-0 052 291        US-A-3 385 355
EP-A-0 055 419        US-A-3 755 995
AU-A- 48 084          US-A-3 757 853
US-A-2 915 119        US-A-4 018 270
US-A-2 966 339        US-A-4 169 501
US-A-3 115 222

PATENT ABSTRACTS OF JAPAN, Band 10, Nr.
77 (M-464)2134r, 26. März 1986; & JP-A-60 219
411 (NISSAN JIDOSHA K.K.) 02-11-1985
Günter Walter, Kunststoffe und Elastomere in
Kraftfahrzeugen, 1985, Kohlhammer, Stuttgart;
Berlin; Köln; Mainz, Seiten 159, 160

(73) Patentinhaber: DEERE & COMPANY
1 John Deere Road
Moline, Illinois 61265 (US)

(72) Erfinder: Holm, David Roy
1608 Lawndale
Dubuque Iowa 52001 (US)
Erfinder: Wubben, Carl Arthur
3075 Vail Trail Court
Dubuque Iowa 52001 (US)

(74) Vertreter: Feldmann, Bernhard et al
DEERE & COMPANY European Office, Patent
Department Steubenstrasse 36-42 Postfach 503
D-6800 Mannheim 1 (DE)

**Beschreibung**

Die Erfindung betrifft einen Wärmetauscher mit Durchlässen für von einem Gebläse geförderte Kühlluft und mit einer Eingangsseite, an der ein insbesondere aus mehreren Teilsieben zusammengesetztes Sieb mit Leitöffnungen zum gerichteten Leiten eines Stromes von Kühlluft durch die Durchlässe vorgesehen ist.

Die US-A-4 169 501 offenbart einen Wärmetauscher mit einem sogenannten Sandsieb, das eine Vielzahl kleiner Kanäle enthält, deren Wände parallel zu den Wänden von in dem Wärmetauscher vorgesehenen Durchlässen verlaufen und die den eintretenden Luftstrom, sowie in ihm enthaltene Schmutzteile mit geringstmöglichem Widerstand durch die Durchlässe leiten. Da die Schmutzteile zunächst auf das Sandsieb auftreffen, muß dieses gelegentlich gereinigt werden. Bei einem Einbau in der in Figur 1 dieses Dokuments schematisch gezeigten Weise ist dies wohl dadurch möglich, daß ein vorgeblendeter Grill entfernt, das Sandsieb durch Entfernen mehrerer Schrauben demontiert und anschließend mit Druckluft gereinigt wird.

In der Praxis stößt eine derartige verfahrensweise bei der Verwendung eines Wärmetauschers unter der Haube eines Kraftfahrzeuges jedoch auf Probleme, da ein optimaler Betrieb dessen Verbrennungsmotors den Einbau von Leitblechen und Gehäusen für dessen Kühlaggregat erfordert. Diese Leitbleche sorgen für einen Luftstrom mit geringstmöglichen Turbulenzen und versuchen nur frische, hingegen nicht erhitzte, Luft zu dem Wärmetauscher gelangen zu lassen. Dadurch wird der sonstige Zugang zu dem Wärmetauscher jedoch wesentlich erschwert.

Desgleichen ist aus der US-A-3 385 355 ein Leitsieb im Ansaugkanal eines Kraftfahrzeugkühlers bekannt, das den gesamten Kanalquerschnitt überspannt und sich zwischen einem Flügelrad und einem Wärmetauscher befindet. Aufgrund seiner Anordnung kann es ebenfalls nicht zu Reinigungszwecken auf einfache Weise entnommen werden.

Die der Erfindung zugrunde liegende Aufgabe wird darin gesehen, die Anordnung eines Wärmetauschers in der aus der US-A-4 169 501 bekannten Art so zu verbessern, daß selbst bei einem abgeschirmten und von weiteren Einbauten umgebenen Einbau des Wärmetauschers das Sandsieb ohne großen Aufwand gereinigt werden kann.

Diese Aufgabe ist gemäß der Lehre des Patentanspruchs 1 erfinderisch gelöst worden.

Auf diese Weise kann eine Bedienungsperson durch die Öffnung in dem Gehäuse zu dem Sieb, oder - wenn es sich um eine Eingangsseite mit größerer Fläche handelt - zu den Teilsieben gelangen, diese(s) durch Lösen jeweils nur einer Schraube und einem seitlichen Wegziehen lösen und abseits des Wärmetauschers reinigen.

Dadurch, daß das Sieb aus mehreren Teilsieben, z. B. aus drei übereinander angeordneten Teilsieben, besteht, ist bei einer großen abzudeckenden Eingangsseite eines Wärmetauschers eine Gewichtsreduzierung der zu montierenden Siebteile gegeben.

Außerdem braucht bei einem Wärmetauscher mit einigen verstopften Durchlässen nicht das gesamte Sieb demontiert zu werden, sondern es reicht aus, wenn das die verstopften Durchlässe bedeckende Teilsieb abgebaut wird.

Aus Gründen einer einfachen Montierbarkeit ist vorgesehen, daß an dem Wärmetauscher Halteschienen vorgesehen sind und das Sieb bzw. die Teilsiebe einerseits über eine Steckverbindung und andererseits über eine formschlüssige Verbindung an den Halteschienen angreift bzw. angreifen. Wie die detaillierte Ausbildung der Steckverbindung bzw. der formschlüssigen Verbindung auf vorzügliche Weise aussehen kann, ist Gegenstand der Ansprüche 3 und 4.

Es ist auch bekannt, Wärmetauscher mit einem Gehäuse zu verbinden und mit einer Motorverkleidung zu umgeben, damit der Strom der Kühlluft noch besser geleitet wird, damit Luftverunreinigungen nicht in diesen Strom aufgenommen werden oder damit kein ungewollter Zugriff zu dem Gebläse besteht. Um bei diesen Wärmetauschern dennoch eine leichte Demontierbarkeit der Teilsiebe zu gewährleisten, ohne das Gehäuse oder die Motorverkleidung demontieren zu müssen, ist vorteilhafterweise vorgesehen, daß in dem Gehäuse wenigstens eine Öffnung zur Demontage eines der Teilsiebe vorgesehen ist. Falls eine weitere Öffnung zum gleichen Zweck vorgesehen wird, ist diese nach einem weiteren den Erfindungsgedanken fortführenden Gedanken so gelegen, daß sie der Öffnung direkt vertikal gegenüberliegt. Dies bietet den Vorteil, daß außer einem guten Zugang zu den Teilsieben bei besonders lang ausgebildeten Teilsieben diese einfach in das Gehäuse eingeführt und in diesen zum Montieren bewegt werden können.

In der Zeichnung ist ein nachfolgend näher beschriebenes Ausführungsbeispiel der Erfindung dargestellt. Es zeigt:

Figur 1 eine perspektivische Ansicht eines Kraftfahrzeuges mit einem an seinem rückwärtigen Ende angebrachten, jedoch verdeckten Wärmetauscher,

Figur 2 eine Vorderansicht des Wärmetauschers in der Blickrichtung der Pfeile 2 - 2 in Figur 1,

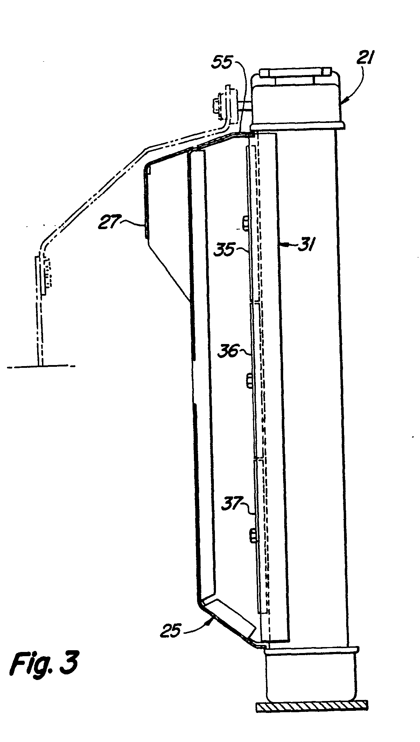

Figur 3 eine Seitenansicht des Wärmetauschers in der Blickrichtung der Pfeile 3 - 3 in Figur 2,

Figur 4a eine Steckverbindung eines Teilsiebes an dem Wärmetauscher im Schnitt und in der Blickrichtung der Pfeile 4a -4a in Figur 2 und

Figur 4b eine formschlüssige Verbindung eines Teilsiebes an dem Wärmetauscher im Schnitt und in der Blickrichtung der pfeile 4b -4b in Figur 2.

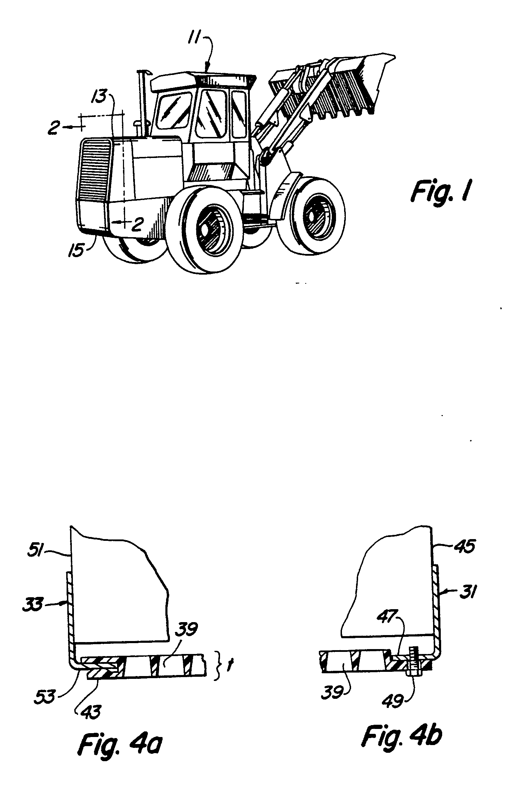

Aus Figur 1 ist ein Kraftfahrzeug 11 in der Art eines Radladers ersichtlich, das eine Motorverkleidung 13 an seinem rückwärtigen Ende aufweist. Unterhalb der Motorverkleidung 13 ist auf herkömmliche Weise eine nicht dargestellte Brennkraftmaschine auf einem Rahmen 15 befestigt, die unter anderem dazu dient, ein Flügelrad 17 auf bekannte Weise anzutreiben. Das Flügelrad 17, das auch eine Turbine sein könnte, ist mit einer Vielzahl von in Umfangsrichtung einen Abstand zueinander aufweisenden Flügeln 19 versehen. Ferner befindet sich unterhalb der Motorverkleidung 13 in bekannter Weise ein Wärmetauscher 21, herkömmlich als Kühler bezeichnet, der gegenüber dem Flügelrad 17 und in Abstand zu diesem eingebaut ist. Seitlich des Wärmetauschers 21 und gegenüber dem Flügelrad 17 ist unter der Motorverkleidung ferner ein Kühler 23 fest angeordnet, der einem Kühlsystem eines Getriebes des Kraftfahrzeuges 11 zugeordnet ist. Zwischen dem Wärmetauscher 21 und dem Flügelrad 17 erstreckt sich ein fest angeordnetes Gehäuse 25 mit einem Oberteil 27, der sich nach vorne und bis über das Flügelrad 17 erstreckt.

Das Flügelrad 17 saugt Kühlluft unter die Motorverkleidung 13 und bläst diese durch das Gehäuse 25, damit sie zu dem Wärmetauscher 21 und dem Kühler 23 gelangt und diese durchströmt. Auf diese Weise wird Flüssigkeit, die durch den Wärmetauscher 21 und den Kühler 23 in bekannter Weise geführt wird, gekühlt. Um insbesondere den Wärmetauscher 21 vor einer vorzeitigen Zerstörung durch die verschleißende Wirkung von in der Kühlluft schwebenden Sandpartikeln zu schützen, ist ein Sieb 29, auch Sandsieb genannt, fest und unmittelbar an den Wärmetauscher 21 zwischen dem Flügelrad 17 und dem Wärmetauscher 21 an Halteschienen 31 und 33 angebracht.

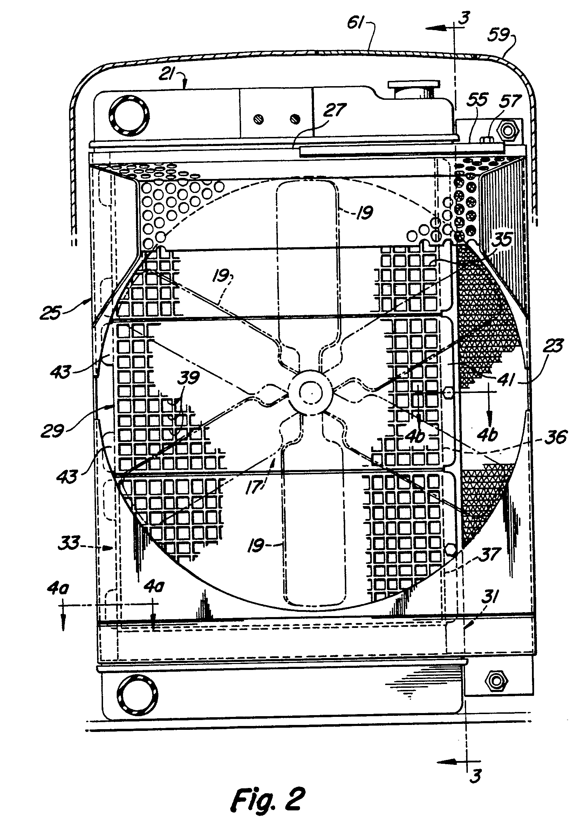

Wie insbesondere aus den Figuren 2, 4a und 4b hervorgeht, besteht das Sieb 29 aus einer Vielzahl von Teilsieben 35, 36 und 37, die übereinandergesteckt angeordnet sind. In dem bevorzugten Ausführungsbeispiel sind alle Teilsiebe 35, 36 und 37 identisch zueinander ausgebildet, weshalb auch nur das Teilsieb 36 im Detail beschrieben wird.

Vorzugsweise ist das Teilsieb 36 aus einem polymeren Material, also einem Kunststoff, gebildet, etwa gepreßt oder gegossen, und weist eine Vielzahl von im allgemeinen im Querschnitt rechteckigen, zudem konisch verlaufenden Hohlräumen oder Leitöffnungen 39 von gleicher Tiefe -t- auf. Die Konizität der Hohlräume 39 verläuft derart, daß sich die Leitöffnungen 39 in Richtung auf den Wärmetauscher 21 zu, also in Richtung auf dessen Eingangsseite, an der die Teilsiebe 35, 35 und 37 anliegen, im Querschnitt verengen.

Selbstverständlich sind die Leitöffnungen 39 zu beiden Seiten offen, so daß sie die von dem Flügelrad 17 geförderte Kühlluft mittels ihrer Konizität leiten und zu nicht gezeigten Durchlässen in dem Wärmetauscher 21 weitergeben. Einerseits, und zwar auf dessen linken Seite mit Blick auf Figur 2, sind an dem Teilsieb 36 mehrere Befestigungsklemmen 43 angegossen oder auf sonstige Weise angeformt, die auf der Länge der vertikal gelegenen Seite des eingebauten Teilsiebes 36 einen Abstand zueinander aufweisen und gabelförmig ausgebildet sind, so daß sie die Halteschiene 33, die im Bereich des Teilsiebes 36 flach ausgebildet ist, beidseitig übergreifen können. Andererseits ist an das Teilsieb 36 eine Lasche 41 angeformt, die sich über die ganze vertikale Länge des Teilsiebes 36 erstreckt.

Die Halteschiene 31 ist L-förmig ausgebildet und mit einem Schenkel an einer Seitenwand 45 des Wärmetauschers 21 auf übliche Weise, z. B. durch Schweißen, sich vertikal erstreckend angebracht. Der andere Schenkel der Halteschiene 31, der mit 47 beziffert und flach ausgebildet ist, erstreckt sich im wesentlichen vertikal und parallel zu der Eingangsseite des Wärmetauschers 21, so daß die Lasche 41 an den Schenkel 47 angelegt und an diesem insbesondere mittels einer Schraube 49 befestigt werden kann. Mit dieser Schraube 49 ist eine zuverlässige formschlüssige Verbindung zwischen dem Teilsieb 36 und dem Wärmetauscher 21 geschaffen.

Die Halteschiene 33 weist ebenfalls einen L-förmigen Querschnitt auf und ist an einer sich vertikal erstreckenden Seitenwand 51 des Wärmetauschers 21 angeschweißt. Die Halteschiene 33 enthält einen Schenkel 53, der sich im wesentlichen vertikal und parallel zu der Eingangsseite des Wärmetauschers 21 derart erstreckt, daß er sicher von den Befestigungsklemmen 43 des Teilsiebes 36 übergriffen werden kann, so daß das Teilsieb 36 mit der Halteschiene 33 eine Steckverbindung eingeht. Auf diese Weise ist jedes Teilsieb 35, 36 und 37 leicht demontierbar und sich über die Breite der Eingangsseite des Wärmetauschers 21 erstreckend angebracht.

Aus Figur 2 ist zu entnehmen, daß das Gehäuse 25 eine Öffnung zu Wartungszwecken aufweist, die durch eine Klappe 55 geschlossen werden kann, die wiederum mittels einer Schraube 57 lösbar befestigt ist. Auch eine Haube 59 der Motorerkleidung 13 ist mit einer Öffnung und einer Klappe 61 versehen, die ebenfalls auf herkömmliche Weise befestigt und vertikal über der Klappe 55 gelegen ist. Die Teilsiebe 35 und 37 können genauso wie das Teilsieb 36 montiert und demontiert werden, indem die Klappe 61 und darunter die Klappe 55 von der Motorverkleidung 13 entfernt werden. Daraufhin ist es möglich, durch die Öffnungen in der Haube 59 und in dem Gehäuse 25 zu den Teilsieben 35, 36 und 37 zu gelangen, deren Schrauben 49 zu entfernen und die Teilsiebe 35, 36 und 37 durch seitliches Wegziehen von der Halteschiene 33 zu lösen, so daß diese von den Befestigungsklemmen 43 freigegeben wird. Schließlich können die Teilsiebe 35, 36 und 37 um 90° gedreht und durch die Öffnungen entfernt werden. Anstehende Wartungsarbeiten können dann durch die Öffnungen durchgeführt werden, und eine Demontage der Motorverkleidung 13 oder des Gehäuses 25 ist nicht erforderlich.

## Patentansprüche

1. Wärmetauscher mit Durchlässen für von einem Gebläse geförderte Kühlluft und mit einer Eingangsseite, an der ein insbesondere aus mehreren Teilsieben (35, 36, 37) zusammengesetztes Sieb (29) mit Leitöffnungen (39) zum gerichteten Leiten eines Stromes von Kühlluft durch die Durchlässe vorgesehen ist, dadurch gekennzeichnet, daß an dem Wärmetauscher Halteschienen (31, 33) und ein Gehäuse (25) vorgesehen sind, daß das Sieb (29) bzw. die Teilsiebe (35, 36, 37) einerseits über eine Steckverbindung und andererseits über eine formschlüssige Verbindung an den Halteschienen (31, 33) angreift(en), und daß in dem Gehäuse (25) wenigstens eine Öffnung zur Demontage des Siebs (29) bzw. eines der Teilsiebe (35, 36, 37) vorgesehen ist.

2. Wärmetauscher nach Anspruch 1, dadurch gekennzeichnet, daß die Leitöffnungen (39) konisch und mit Richtung auf die Einlaßseite hin sich verjüngend ausgebildet sind.

3. Wärmetauscher nach den Ansprüchen 1 oder 2, dadurch gekennzeichnet, daß wenigstens eine der Halteschienen (31, 33) einerseits flach ausgebildet ist, und das Sieb (29) bzw. die Teilsiebe (35, 36, 37) einerseits die Halteschiene (33) in ihrem flachen Bereich beidseitig übergreifende Befestigungsklemmen (43) aufweisen.

4. Wärmetauscher nach einem der Ansprüche 1 bis 3, dadurch gekennzeichnet, daß das Sieb (29) bzw. die Teilsiebe (35, 36, 37) andererseits Befestigungsöffnungen zur Aufnahme insbesondere einer Schraube (49) aufweist bzw. aufweisen, die in dem Wärmetauscher festlegbar ist.

5. Wärmetauscher nach einem oder mehreren der Ansprüche 1 bis 4, dadurch gekennzeichnet, daß er mit dem Gehäuse (25) unter einer Motorverkleidung (13) angeordnet ist, in der eine weitere Öffnung vorgesehen ist, die der Öffnung in dem Gehäuse (25) direkt vertikal gegenüberliegt.

**Revendications**

1. Echangeur de chaleur comportant des passages pour de l'air de refroidissement refoulé par un ventilateur et comportant un côté d'entrée où l'on prévoit un filtre (29) se composant en particulier de plusieurs filtres composants (35, 36, 37) pourvu d'ouvertures de guidage (39) pour le guidage dirigé d'un courant d'air de refroidissement à travers les passages, caractérisé en ce qu'on prévoit sur l'échangeur de chaleur des barres de retenue (31, 33) et un boîtier (25), en ce que le filtre (29) ou les filtres composants (35, 36, 37) est ou sont appliqué(s) d'une part, par un emboîtement mâle-femelle et d'autre part, par une liaison par concordance de forme aux barres de retenue (31, 33), et en ce qu'on prévoit dans le boîtier (25) au moins une ouverture pour le démontage du filtre (29) ou de l'un des filtres composants (35, 36, 37).

2. Echangeur de chaleur suivant la revendication 1, caractérisé en ce que les ouvertures de guidage (39) ont une conformation conique et se rétrécissent en direction du côté d'entrée.

3. Echangeur de chaleur suivant la revendication 1 ou 2, caractérisé en ce que l'une au moins des barres de retenue (31, 33) a une configuration plate d'un côté, et le filtre (29) ou les filtres composants (35, 36, 37) comportent d'un côté des pinces de fixation (43) recouvrant des deux côtés la barre de retenue (33) dans sa zone plate.

4. Echangeur de chaleur suivant l'une des revendications 1 à 3, caractérisé en ce que le filtre (29) ou les filtres composants (35, 36, 37) comportent de l'autre côté des ouvertures de fixation pour recevoir en particulier une vis (49) qui peut être bloquée dans l'échangeur de chaleur.

5. Echangeur de chaleur suivant une ou plusieurs des revendications 1 à 4, caractérisé en ce qu'il est placé avec le boîtier (25) sous un capotage de moteur (13) dans lequel est prévue une autre ouverture qui est située verticalement directement en regard de l'ouverture du boîtier (25).

**Claims**

1. Heat exchanger with passages for cooling air supplied by a fan and with an inlet side on which there is provided a screen (29), in particular assembled from a plurality of component screens (35, 36, 37), with guide openings (39) for directed conduct of a stream of cooling air through the passages, characterized in that retaining strips (31, 33) and a housing (25) are provided on the heat exchanger, in that the screen (29) or the component screens (35, 36, 37) engages or engage the retaining strips (31, 33) on the one side through a plug and socket connection and on the other side through an interlocking connection, and in that there is provided in the housing (25) at least one opening for dismounting the screen (29) or one of the component screens (35, 36, 37).

2. Heat exchanger according to claim 1, characterized in that the guide openings (39) are formed conically, tapering towards the direction of the inlet side.

3. Heat exchanger according to claim 1 or 2, characterized in that at least one of the retaining strips (31, 33) is formed flat on one side and the screen (29) or the component screens (35, 36, 37) comprise on the one side fixing clips (43) engaging over both sides of the retaining strip (33) in its flat region.

4. Heat exchanger according to one of claims 1 to 3, characterized in that the screen (29) or the component screens (35, 36, 37) has or have on the other side fixing openings for receiving in particular a screw (49), which can be fixed in the heat exchanger.

5. Heat exchanger according to one or more of claims 1 to 4, characterized in that it is arranged with the housing (25) under an engine casing (13), in which a further opening is provided, which lies directly vertically opposite the opening in the housing (25).

Fig. 1

Fig. 4a

Fig. 4b

**Fig. 2**

Fig. 3